(19) Europäisches Patentamt
European Patent Office
Office européen des brevets

(11) **EP 4 438 680 A1**

(12) **EUROPEAN PATENT APPLICATION**

(43) Date of publication:
**02.10.2024 Bulletin 2024/40**

(21) Application number: **23164414.7**

(22) Date of filing: **27.03.2023**

(51) International Patent Classification (IPC):
**C08L 67/02** (2006.01)       **C08L 67/04** (2006.01)

(52) Cooperative Patent Classification (CPC):
(C-Sets available)
**C08L 67/02; C08L 67/04**                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BASF SE
67056 Ludwigshafen (DE)**

(72) Inventors:
• **SIEGENTHALER, Kai Oliver
67056 Ludwigshafen am Rhein (DE)**

• **LOHMANN, Jerome
67056 Ludwigshafen am Rhein (DE)**
• **SCHICK, Michael Bernhard
67056 Ludwigshafen am Rhein (DE)**
• **BATTAGLIARIN, Glauco
67056 Ludwigshafen am Rhein (DE)**

(74) Representative: **BASF IP Association
BASF SE
GBI-C006
67056 Ludwigshafen (DE)**

(54)    **POLYESTERBLEND FOR HOME COMPOSTABLE APPLICATIONS**

(57)    Use of a polymer composition comprising 10 to 85 wt.-%, based on the total weight of the polylactic acid a) and the aliphatic-aromatic biodegradable polyester b), of at least one polylactic acid a) and 15 to 90 wt.-%, based on the total weight of the polylactic acid a) and the aliphatic-aromatic biodegradable polyester b), of at least one biodegradable aliphatic-aromatic polyester for producing home compostable articles.

**EP 4 438 680 A1**

(52) Cooperative Patent Classification (CPC): (Cont.)

C-Sets
**C08L 67/02, C08L 67/04;**
**C08L 67/04, C08L 67/02**

**Description**

The present invention relates to the use of home compostable aliphatic-aromatic polyesters derived from aliphatic $C_6$-$C_{18}$ dicarboxylic acids, aromatic dicarboxylic acids, and aliphatic $C_2$-$C_{10}$ diols for improving the home compostability of polylactic acid and to the use of mixtures comprising such aliphatic-aromatic polyesters and polylactic acid for the production of home compostable articles. The invention also relates to a process for producing home compostable articles from compositions comprising such aliphatic-aromatic polyesters and polylactic acid.

The use of thermoplastic materials such as polystyrene, polyethylene and polyurethane has long been established in many technical areas, in particular in packaging. However, these conventional thermoplastic materials face an increasing criticism for environmental reasons, in particular in regard to plastic littering and sustainable circular economy. To circumvent such problems biodegradable thermoplastic polymers were developed both from natural and fossil resources. Such biodegradable alternatives are aliphatic-aromatic polyesters like poly(butylene-co-adipate-co-terephthalate) (PBAT), poly(butylene-co-azelate-co-terephthalate) (PBAzT) and poly(butylene-co-sebacate-co-terephthalate) (PBSeT), aliphatic polyesters like poly(butylene-co-succinate) (PBS), starch and its derivatives like thermoplastic starch (TPS), polylactic acid (PLA), polycaprolactone (PCL), polyglycolic acid (PGA), and polyhydroxy alkanoates (PHA).

It has to be noticed, that terms like "biodegradability", "biodegradable" and "compostability" are used for biological degradation under a wide range of different environmental conditions. The result of the biodegradability is generally that the polymers or polymer mixtures break down within an appropriate and demonstrable period. The biological degradation may be brought about enzymatically, hydrolytically, oxidatively, and/or via exposure to electromagnetic radiation, such as UV radiation, and is mostly predominantly caused by exposure to microorganisms, such as bacteria, yeasts, fungi, and algae and depends on the specific ambient conditions. In consequence different standards were developed for the determination of biodegradability or compostability under specified conditions.

An example of requirements and methods for quantifying the biodegradability of polyesters in compost is defined in DIN EN 13432 (December 2000, "Requirements for packaging recoverable through composting and biodegradation"). Compostability according to this standard simulates decomposition in industrial composting plants and requires that a material mixed with compost under defined conditions of temperature of 58 $\pm$ 2°C, oxygen and moisture in the presence of micro-organisms as specified in ISO 14855 : 1999, must have biodegraded within at maximum six months to at least 90 % in total ("absolute" $CO_2$ evolution) or 90 % of the maximum biodegradation of a reference material, e.g. cellulose, ("relative" $CO_2$ evolution) into water, carbon dioxide and biomass. The percentage of biodegradation is based on the conversion of the carbon of the test substance into carbon dioxide. The compostability under these conditions is also called industrial compostability.

Another example is DIN EN 17033:2018, which defines that a polymer blend used for the production of soil biodegradable mulch films is "biodegradable in soil", if this polymer blend reaches a percentage of biodegradation of at least 90% in total or 90 % of the maximum biodegradation of a reference material within 2 years under the conditions specified in DIN EN ISO 17556.

Other methods of determining biodegradability are described by way of example in ASTM D5338 and ASTM D6400.

Home compostability of a polymer composition can determined by also following the methods described in ISO 14855-1 (2012) or EN ISO 14855-2 but using a lower temperature. The criteria for reaching home compostability are e.g. defined in ISO DIN EN 17427:2022. According to this norm a polymer composition can be classified as home compostable if it reaches according 90% absolute or relative $CO_2$ evolution within 365 days at a temperature in the range of from 25 +/-5°C, i.e. the polymer composition is biodegradable under less severe conditions than industrial composting conditions.

Home compostability is valuable for articles used as single use packaging, e.g. in private households. In particular, the value of biodegradation is favorable for food contaminated packaging which cannot be properly mechanically recycled. In countries and regions without access to an established infrastructure of industrial biowaste treatment facilities like composting or anaerobic digestion plants, home composting is of a benefit.

An article like a food container made of a home compostable polymer is not automatically considered and certified as home compostable. This is due to the change that can be made to the article such as the size, form, thickness etc. and other components possibly present. Therefore, the producer of the article has to prove the home compostability. The article itself may have to be tested according to ISO DIN EN 17427:2022, depending e.g. on information already available about the home compostability of other articles made from the home compostable composition.

Some of the biodegradable polymers mentioned above are compostable under industrial conditions but not under home composting conditions. Examples are polylactic acid, polyhydroxy octanoate, poly(butylene-co-succinate), and mixtures of polylactic acid and polyhydroxy butyrate. Others are compostable under industrial composting conditions as well as under the less severe conditions of home composting, e.g. thermoplastic starch, polyhydroxy butyrate, poly(butylene-co-sebacate-co-terephthalate), polycaprolactone and certain mixtures of polylactic acid and polycaprolactone, see e.g. Environ. Sci. Technol. 2018, 52, pages 10441-10452.

The biodegradable polymers are usually used in mixtures combining different biodegradable polymers. Ideally, these mixtures combine the desirable properties of the individual components, for example the generally good processing and mechanical properties, relatively low-cost availability and environmentally non-hazardous preparation and disposal of the polymers.

US 2008/0281018A1 describes biodegradable polyester mixtures comprising 5 to 80 wt.-% of a biodegradable aliphatic-aromatic polyester and 20 to 95 wt.-% of a biodegradable polyester selected form polylactic acid, polycaprolactone, polyhydroxyalkanoates and aliphatic polyesters, a copolymer comprising epoxy groups and optionally further additives and fillers. Such compositions are widely used in the manufacture of flexible films for different applications, e.g. mulch films, consumer bags and waste bags, and for coating and lamination on a substrate. The addition of the rigid polymer polylactide to the biodegradable polyesters increases the E-modulus and tensile strength of the polyester composition and improves the processability of the composition during film blowing. The compositions of polylactic acid and biodegradable polyester may comprise further components like fillers and additional biodegradable polymers.

As mentioned above polylactic acid per se is not home compostable and so are compositions containing polylactic acid (>10%) and other biodegradable polymers like polyhydroxybutyrate. Similar behavior is also expected for mixtures comprising predominantly polylactic acid and minor amounts of an aliphatic-aromatic polyesters like poly(butylene-co-adipate-co-terephthalate). However, this is different for compositions comprising polycaprolactone and polylactic acid, which are completely home compostable. Unfortunately, polycaprolactone is very expensive and is available from fossil origin only.

In view of increasing problems with plastic littering and the aim to establish a sustainable economy, there is still the need to provide further measures to improve the home compostability of polylactic acid and to provide polymer materials comprising polylactic acid which fulfill the requirements of common polymer processing techniques like film blowing, extrusion coating, thermoforming, extrusion, injection molding, blow molding, or fiber spinning, and can be used to produce articles for a variety of different applications, which are not only biodegradable under industrial composting conditions but also under home composition conditions.

An object underlying the present invention is therefore the improvement of the home compostability of polylactic acid. Another object is providing home compostable articles comprising polylactic acid.

Surprisingly it was found that biodegradable aliphatic-aromatic polyesters derived from:

b-1) 20 bis 70 mol-%, based on the total amount of components b-1) and b-2), of at least one aliphatic $C_6$-$C_{18}$ dicarboxylic acid or $C_6$-$C_{18}$ dicarboxylic acid derivative,
b-2) 80 bis 30 mol-%, based on the total amount of components b-1) and b-2), of at least one aromatic dicarboxylic acid or aromatic dicarboxylic acid derivative,
b-3) 98 to 102 mol-%, based on the total amount of b-1) and b-2), of an aliphatic $C_2$-$C_{10}$ diol,
b-4) 0 to 2 wt%, based on the total weight of components b-1), b-2) and b-3), of an at least trihydric alcohol, and
b-5) 0 to 2 wt%, based on the total weight of components b-1), b-2) and b-3), of a chain extender;

improve the home compostability of polylactic acid.

Equally surprising it was found that polymer compositions comprising

a) 10 to 85 wt.-%, based on the total weight of the polylactic acid a) and the aliphatic-aromatic biodegradable polyester b), of at least one polylactic acid a);
b) 15 to 90 wt.-%, based on the total weight of the polylactic acid a) and the aliphatic-aromatic biodegradable polyester b), of at least one biodegradable aliphatic-aromatic polyester (b) derived from:

b-1) 20 bis 70 mol-%, based on the total amount of components b-1) and b-2), of at least one aliphatic $C_6$-$C_{18}$ dicarboxylic acid or $C_6$-$C_{18}$ dicarboxylic acid derivative,
b-2) 80 bis 30 mol-%, based on the total amount of components b-1) and b-2), of at least one aromatic dicarboxylic acid or aromatic dicarboxylic acid derivative,
b-3) 98 to 102 mol-%, based on the total amount of b-1) and b-2), of an aliphatic $C_2$-$C_{10}$ diol,
b-4) 0 to 2 wt%, based on the total weight of components b-1), b-2) and b-3), of an at least trihydric alcohol, and
b-5) 0 to 2 wt%, based on the total weight of components b-1), b-2) and b-3), of a chain extender;

c) 0 to 40 wt.-%, based on components a) to f), of at least one biodegradable polyester;
d) 0 to 55 wt.-%, based on components a) to f), of at least one starch- or cellulose-based polymer;
e) 0 to 40 wt.-%, based on components a) to f), of at least one inorganic filler; and
f) 0 to 40 wt.-%, based on components a) to f), of at least one compound selected from cross-linking agents, chain extenders, stabilizers, nucleating agents, lubricants, release agents, surfactants, waxes, antistatic agents, antifoggants, dyes, pigments, UV absorbers, UV stabilizers, oxygen scavengers, dispersing agents, and other plastics additives.

can be used for producing home compostable articles.

The present invention also relates to a process for producing home compostable articles.

The present invention is described in more detail below.

Home compostability can be determined by different methods and standards as laid down in different norms and regulatory requirements. Such norms and regulatory requirements may be different from each other depending on the current laws and regulations regarding the certification of home compostability, which are in place in different territories and countries. Examples are ISO DIN EN 17427:2022 and the French standard NF T 51-800 *Plastics - Specifications for plastics suitable for home compositing* (2015). In principle, the home compostability may be determined according to any of such norms and standards.

According to preferred example of the determination of home compostability of a polymer or polymer composition, such polymer or polymer composition is classified as home compostable in case particles of the polymer or polymer composition having a particle size in the range of 100 to 300 microns reaches 90% absolute or relative $CO_2$ evolution within 365 days at a temperature of 25 +/- 5°C determined according to 14855-1 (2012) or EN ISO 14855-2 (2012).

A preferred example of determining the home compostability of an article is ISO DIN EN 17427:2022.

The polymer composition comprises 10 to 85 wt.-% of at least one polylactic acid a), based on the total weight of polylactic acid a) and aliphatic-aromatic biodegradable polyester b).

Polylactic acid (PLA), also known as polylactide, is a thermoplastic polyester with backbone formula $(C_3H_4O_2)_n$ or $[-C(CH_3)HC(=O)O-]_n$, formally obtained by condensation of lactic acid $C(CH_3)(OH)HCOOH$ with loss of water. It can also be prepared by ring-opening polymerization of either D-lactide, L-lactide, meso-lactide or mixtures thereof. In case only D- or only L-lactide are polymerized, the resulting polymer chains consist essentially of D- or L-lactic acid units, respectively. In case of polymerizing of a mixture of D- and L-lactide longer sequences of $-(D)_n$ and $-(L)_n$ are obtained due to the random polymerization of D- and L-lactide. In case the PLA is prepared from D-lactide and L-lactide only, i.e. without meso-lactide, the minimum block length of the D- and L-lactic units in the polylactide is 2 from a theoretical point of view. This would only be the case in a strict alternating reaction of D- and L-lactide. The latter also holds true if mixtures of either L-lactide and a minor amount of meso-lactide or D-lactide with a minor amount of meso-lactide are polymerized.

The term "units derived from lactic acids", also referred to as "lactic units", means the monomeric lactic acid units derived from L-lactic acid or D-lactic acid.

Polylactic acid containing mainly repeating units derived from meso-lactide is also called poly(meso-lactide) or poly(meso-lactic acid) and may be abbreviated as PMLA herein. Meso-lactide is the cyclic diester of a D-lactic acid and a L-lactic acid. Essentially, the homopolymerization of meso-lactide yields a polymer wherein the D-lactic acid units and the L-lactic acid units are distributed quite regular in the polymer chain, since there could be a reaction by two L-lactic acids units or two D-lactic acids units (head to head reaction) resulting in the sequence $-(L-D-D-L-)_n$ or $-(D-L-L-D-)_n$ or there can be a reaction of the L-lactic acid unit with a D-lactic acid unit (head to tail reaction) resulting in the sequence $-(D-L-D-L)_n$. This means the average sequence length, also called average block length of L-lactic units and D-lactic units resulting from the ring opening polymerization and neglecting any transesterification reactions is at a minimum 1 and at a maximum 2. Random polymerization of meso-lactide yields an average sequence length of the consecutive D- and L-lactic acid units between these limits, i.e. between 1 and 2. Additionally, the ratio of D- and L-lactic acid units in the polymers derived from meso-lactide only is close to 1:1. Further details and information about the preparation of poly(meso-lactide) are described in US 5,142,023 and WO 2020/251745A1.

The polylactic acid may further contain repeating units formed from other monomers that are co-polymerizable with meso-lactide or D- or L-lactide, such as alkylene oxides (including ethylene oxide, propylene oxide, butylene oxide, tetramethylene oxide, and the like), cyclic lactones, or carbonates. Repeating units derived from these other monomers can be present in block and/or random arrangements. These other repeating units may constitute up to 10% by weight of the polylactic acid, preferably from 0% to 5% by weight, especially preferred from about 0% to 2% by weight, of the PLA, and may be absent. The remaining weight of the polylactic acid may include residues of an initiator compound, which is often used during the polymerization process to provide molecular weight control. Suitable such initiators include, for example, water, alcohols, polyhydroxy compounds of various types (such as ethylene glycol, propylene glycol, polyethylene glycol, polypropylene glycol, other glycol ethers, glycerin, trimethylolpropane, pentaerythritol, hydroxy-terminated butadiene polymers, and the like), polycarboxyl-containing compounds, and compounds having at least one carboxyl and one hydroxyl group (such a lactic acid or lactic acid oligomer). The initiator residue preferably constitutes no more than 5%, and especially no more than 2% of the weight of the polylactic acid except in the case in which the initiator is a residue of a lactic acid or lactic acid oligomer, which can constitute any proportion of the polylactic acid.

The polylactic acid may have a number-average molecular weight as measured by GPC in THF against a polystyrene standard of at least 5 000 g/mol, preferably at least 20 000 g/mol, more preferred at least 30 000 g/mol and most preferred more than 50 000 g/mol. Preferably, the upper limit of the number-average molecular weight is 200 000 g/mol, more preferred 130 000 g/mol. Preferably polylactic acid has a number-average molecular weight in the range of 5 000 g/mol to 200 000, more preferred the number-average molecular weights is in the range of 20 000 to 200 000 g/mol, even more preferred in the range of 30 000 to 130 000 g/mol, in particular in the range of 50 000 to 130 000 g/mol..

The polylactic acid may have a relative viscosity of 1.1 to 6, such as 1.25 to 5, or 1.5 to 3.5, measured using a 1% wt/vol solution of the polylactic acid in chloroform against a chloroform standard on a capillary viscometer at 30°C.

The polylactic acid may have a melt volume rate (MVR) to EN ISO 1133 (190°C, 2.16 kg weight) of 0.5 to 80, preferably 2 to 40 cm$^3$/10 min.

The polylactic acid may be crystalline, semi-crystalline or amorphous. Particularly, suitable polylactic acid has a melting or softening point below 240°C, particularly below 230°C, especially below 220°C, as determined by DSC. Generally, the melting point of crystalline or semi crystalline polylactic acid will be at least 120°C.

Polylactic acids are commercially available from NatureWorks, for example, under the trade name Ingeo™ 6201D, Ingeo™ 6202D, Ingeo™ 6251D, Ingeo™ 3051D, Ingeo™ 4043D, Ingeo™ 3251D; from Total Corbion under the trade name Luminy® LX975, Luminy® LX930, Luminy® LX175; Luminy® LX575, Luminy® L130, Luminy® LX530, Luminy® L105; from Hisun under the trade name Revode 110, Revode 190 Revode 290.

Particularly preferred the polylactic acid has the following range of properties:

- a melt volume rate (MVR) to EN ISO 1133 (190°C, 2.16 kg weight) of 0.5 to 80 especially 2 to 40 cm$^3$/10 min;
- a melting point below 240° C;
- a water content of below 1000 ppm;
- a residual (lactide) monomer content of below 0.3%;
- a molecular weight $M_w$ of above 80.000 daltons.

The concentration of the polylactic acid a) in the polymer composition is at least 10 wt.- %, preferably at least 15 wt.-%, more preferred at least 25 wt.-%, even more preferred 35 wt.-% and in particular preferred 45 wt.-% based on the total weight of components a) and b). The maximum concentration of the polylactic acid a) in the polymer composition is 85 wt.-%, preferably 80 wt.-%, and more preferred 75 wt.-%, based on the total weight of components a) and b). Preferred concentration ranges of the polylactic acid a) are 10 to 80 wt.-%, more preferred 20 to 80 wt.-%, even more preferred 25 to 80 wt.-%, most preferred 35 to 75 wt.-% and in particular preferred 45 to 75 wt.-%, based on the total weight of components a) and b).

The polymer composition to be used for producing home compostable articles comprises 10 to 85 wt.-%, based on the total weight of the polylactic acid a) and the aliphatic-aromatic biodegradable polyester b), of at least one biodegradable aliphatic-aromatic polyester b) derived from:

b-1) 20 bis 70 mol-%, based on the total amount of components b-1) and b-2), of at least one aliphatic $C_6$-$C_{18}$ dicarboxylic acid or $C_6$-$C_{18}$ dicarboxylic acid derivative,
b-2) 80 bis 30 mol-%, based on the total amount of components b-1) and b-2), of at least one aromatic dicarboxylic acid or aromatic dicarboxylic acid derivative,
b-3) 98 to 102 mol-%, based on the total amount of b-1) and b-2), of an aliphatic $C_2$-$C_{10}$ diol,
b-4) 0 to 2 wt%, based on the total weight of components b-1), b-2) and b-3), of an at least trihydric alcohol, and
b-5) 0 to 2 wt%, based on the total weight of components b-1), b-2) and b-3), of a chain extender.

The aliphatic $C_6$- $C_{18}$ dicarboxylic acids and $C_6$- $C_{18}$ dicarboxylic acid derivatives b-1) are preferably selected from $C_6$ - $C_{16}$, more preferably from $C_6$ - $C_{13}$ dicarboxylic acids, their derivatives and mixtures thereof. Preferably they are $\alpha,\omega$-dicarboxylic acids. The derivatives may be the $C_1$ - $C_6$ dialkyl esters or anhydrides. Examples of the $C_1$ - $C_6$ dialkylesters are dimethyl, diethyl, di-n-propyl, diisopropyl, di-n-butyl, diisobutyl, di-tert-butyl, di-n-pentyl, diisopentyl, and di n-hexylesters. Preferred are the $C_1$ - $C_4$ dialkyl esters and in particular preferred are the dimethyl esters.

Examples of suited aliphatic dicarboxylic acids and their derivatives are adipic acid, pimelic acid, suberic acid, azelaic acid, sebacic acid, undecanedioic acid, dodecanedioic acid, brassylic acid, tetradecanedioic acid, pentadecanedioic acid, hexadecanedioic acid, heptadecanedioic acid, octadecanedioic acid, their derivatives, in particular the $C_1$ - $C_4$ dialkyl esters, and mixtures thereof. Preferably the aliphatic Ce-$C_{18}$ dicarboxylic acids are selected from adipic acid, azelaic acid, sebacic acid, 1,12-dodecanoic acid, brassylic acid, their derivatives, more preferred the $C_1$ - $C_4$ alkyl esters, and mixtures thereof. In particular preferred the aliphatic dicarboxylic acids are selected from adipic acid, azelaic acid, sebacic acid and brassylic acid, their $C_1$ - $C_4$ alkyl esters, and mixtures thereof. Azelaic acid, sebacic acid, and brassylic acid have the additional advantage of being available from renewable raw materials. Most preferred is sebacic acid, its derivatives and mixtures thereof.

The aliphatic $C_6$-$C_{18}$ dicarboxylic acids and their derivatives b-1) may be selected from mixtures of at least two aliphatic acids or their derivatives. Preferred are mixtures comprising a first aliphatic dicarboxylic acid selected from adipic acid, sebacic acid, derivatives thereof, and mixtures thereof, and a second aliphatic dicarboxylic acid selected from suberic acid, azelaic acid, undecanedioic acid, dodecanedioic acid, brassylic acid, tetradecanedioic acid, pentadecanedioic acid, hexadecanedioic acid, heptadecanedioic acid, octadecanedioic acid, their derivatives, and mixtures thereof. More preferred are mixtures comprising sebacic acid and/or a derivative thereof with one or more aliphatic acid selected from adipic acid, azelaic acid, brassylic acid, their derivatives and mixtures thereof as well as mixtures comprising adipic acid and/or a derivative thereof with one or more aliphatic acid selected from sebacic acid, azelaic acid, brassylic acid, their derivatives and mixtures thereof. Most preferred are mixtures of sebacic acid and/or a derivative thereof with azelaic acid and/or a derivative thereof; mixtures of sebacic acid and/or derivative thereof with adipic acid and/or a derivative thereof; and mixtures of adipic acid and/or a derivative thereof with azelaic acid and/or a derivative thereof. Preferred derivatives of the dicarboxlic acids are the $C_1 - C_4$ dialkyl esters.

The aromatic dicarboxylic acids or aromatic dicarboxylic acid derivatives b-2) are preferably selected from aromatic and heteroaromatic $C_6$-$C_{12}$ dicarboxylic acids, more preferred from aromatic and heteroaromatic $C_6$-$C_8$ dicar-boxylic acids, and their derivatives. Examples of such aromatic and heteroaromatic dicarboxylic acids and derivatives are terephthalic acid, isophthalic acid, 2,6-naphthoic acid and 1,5-naphthoic acid, 2,5-furandicarboxylic acid, 2,4-furandicarboxylic acid, 2,3-furandicarboxylic acid, 3,4-furandicarboxylic acid, their $C_1$-$C_6$ dialkyl esters, their anhydrides, where applicable, and mixtures thereof. Preferred are the $C_1$-$C_4$ dialkyl esters, in particular preferred are methyl esters. Examples of the $C_1$-$C_6$ -dialkylesters are dimethyl, diethyl, di-n-propyl, diisopropyl, di-n-butyl, diisobutyl, di-tert-butyl, di-n-pentyl, diisopentyl, and di-n-hexylesters. Preferably the aromatic dicarboxylic acids or their derivatives are selected from terephthalic acid, 2,5-furandicarboxylic acid and their derivatives, preferably their $C_1$-$C_4$ alkyl esters. In particular preferred are terephthalic acid and its $C_1$-$C_4$ alkyl esters.

Preferably the biodegradable polyester b) is derived from

b-1) 20 bis 70 mol %, based on the total amount of components b-1) and b-2), of at least one aliphatic $C_6$-$C_{13}$ dicarboxylic acid or $C_6$-$C_{13}$ dicarboxylic acid derivative,
b-2) 80 bis 30 mol %, based on the total amount of components b-1) and b-2), of at least one dicarboxylic acid selected form terephthalic acid, furan dicarboxylic acid, their derivatives, and mixtures thereof.

The concentration of the aromatic dicarboxylic acid or aromatic dicarboxylic acid derivative b-2) is 80 to 30 mol-%, based on the total amount of components b-1) and b-2). In case the aromatic dicarboxylic acid or dicarboxylic acid derivative is terephthalic acid or a derivative thereof, its concentration in the polyester is preferably 70 to 30 mol%. In case the aromatic dicarboxylic acid or dicarboxylic acid derivative is a furan dicarboxylic acid like 2,5-furandicarboxylic acid or a derivative thereof, its concentration in the polyester is preferably 80 to 50 mol-%, based on the total amount of components b-1) and b-2).

The aliphatic diol b-3) is selected from aliphatic $C_2$-$C_{10}$ diols, preferably from $C_2$-$C_6$ diols, more preferred from $C_2$-$C_4$ diols and in particular preferred from $C_3$-$C_4$ diols. Examples of suitable aliphatic $C_2$-$C_{10}$ diols are 1,2-ethanediol, 1,2-propanediol, 1,3-propanediol, 1,2-butanediol, 1,4-butanediol, 1,5-pentanediol, 2,2-dimethyl-1,3-propanediol (neopentyl glycol), 1,6-hexanediol, 2,4-dimethyl-2-ethyl-1,3-hexanediol, 2,2-dimethyl-1,3-propanediol, 2-ethyl-2-butyl-1,3-propanediol, 2-ethyl-2-isobutyl-1,3 propanediol and 2,2,4-trimethyl-1,6-hexanediol, cyclopentanediol, 1,4-cyclohexanediol, 1,2-cyclohexanedimethanol, 1,3 cyclohexanedimethanol, 1,4-cyclohexanedimethanol, isosorbide, isoiodide and 2,2,4,4-tetramethyl-1,3 cyclobutanediol. Preferred aliphatic $C_2$-$C_{10}$ diols are 1,2-ethanediol, 1,3-propanediol, 1,4-butanediol and 1,6-hexanediol, more preferred are 1,3-propanediol and 1,4-butanediol, most preferred is 1,4-butanediol. It is also possible to use mixtures of different aliphatic diols. Preferably the aliphatic diol b-3) contains at least 50% by moles of one or more diols selected from 1,2-ethanediol, 1,3-propanediol, 1,6-hexanediol and 1,4-butanediol, in particular preferred at least 50% by moles 1,4-butanediol.

In particular preferred are diols generated from renewable resources like 1,4-butanediol from either direct fermentation (WO2008/115840) or from the hydrogenation of biobased succinic acid or 1,3-propanediol from fermentation developed by DuPont and Tate & Lyle.

The aliphatic diol b-3) is present in a concentration of 98 to 102 mol-%, based on the based on the total amount of b-1) and b-2).

Preferred biodegradable polyesters b) are derived from

b-1) 20 bis 70 mol %, based on the total amount of components b-1) and b-2), of at least one aliphatic $C_6$-$C_{13}$ dicarboxylic acid or $C_6$-$C_{13}$ dicarboxylic acid derivative,
b-2) 80 bis 30 mol %, based on the total amount of components b-1) and b-2), of at least one dicarboxylic acid selected form terephthalic acid, furan dicarboxylic acid, their derivatives, and mixtures thereof,
b-3) 98 to 102 mol %, based on the total amount of b-1) and b-2), of an aliphatic $C_3$-$C_4$ diol,
b-4) 0 to 2 wt%, based on the total weight of components b-1), b-2) and b-3), of an at least trihydric alcohol, and
b-5) 0 to 2 wt%, based on the total weight of components b-1), b-2) and b-3), of a chain extender.

More preferred are aliphatic-aromatic polyesters wherein the aliphatic $C_6$-$C_{18}$ dicarboxylic acid and its derivative b-1) are selected from adipic acid, azelaic acid, sebacic acid, 1,12-dodecanedioic acid, brassylic acid, their derivatives, and mixtures thereof; wherein the aromatic dicarboxylic acid and aromatic dicarboxylic acid derivative b-2) are selected from terephthalic acid, 2,5-furandicarboxylic acid, their derivatives and mixtures thereof; and wherein the diol b-3) is 1,4-butanediol. The dicarboxylic acid derivatives are preferably the $C_1$ -$C_4$ alkyl esters, in particular the methyl esters.

In particular preferred are aliphatic-aromatic polyesters wherein the aliphatic $C_6$-$C_{18}$ dicarboxylic acid and its derivative b-1) are selected from

- sebacic acid, its derivatives and mixtures thereof;
- mixtures comprising sebacic acid and/or a derivative thereof and mixtures thereof, and additionally one or more aliphatic $C_6$-$C_{18}$ dicarboxylic acid selected from adipic acid, azelaic acid, 1,12-dodecanedioic acid, brassylic acid, their derivatives, and mixtures thereof;
- adipic acid, its derivatives and mixtures thereof; or
- mixtures comprising adipic acid and/or a derivative thereof and mixtures thereof and additionally one or more aliphatic $C_6$-$C_{18}$ dicarboxylic acid selected from sebacic acid, azelaic acid, 1,12-dodecanedioic acid, brassylic acid, their derivatives, and mixtures thereof;

wherein the aromatic dicarboxylic acid and aromatic dicarboxylic acid derivative b-2) are selected from terephthalic acid, 2,5-furandicarboxylic acid, their derivatives and mixtures thereof; and wherein the diol b-3) is 1,4-butanediol. The dicarboxylic acid derivatives are preferably the $C_1$ - $C_4$ alkyl esters, in particular the methyl esters.

The biodegradable polyester b) may contain a branching agent as component b-4), which contains at least three functional groups which are capable of reacting with a diol or a dicarboxylic acid. Examples are at least trihydric alcohols like glycerol, trimethylolpropane, trimethylolethane, pentaerythritol, polyethertriols and sorbitol or carboxylic acids and hydroxy acids or anhydrides containing three or more groups selected from carboxylic acid groups, carboxylic acid anhydride groups and hydroxy groups like tartaric acid, citric acid, malic acid, trimesic acid, trimellitic acid, trimellitic anhydride, pyromellitic and pyromellitic dianhydride, preferred are trimethylolpropane, pentaerythritol, and glycerol, in particular preferred are trimethylolpropane and glycerol. Component b-4) can be used to construct biodegradable polyesters having structural viscosity. Melt rheology improves in that the biodegradable polyesters become easier to process, for example easier to pull into self-supporting films/sheets by melt solidification.

The concentration of the at least trifunctional branching agent b-4) in the biodegradable polyester is 0 to 2 wt%, based on the total weight of components b-1), b-2) and b-3) in the final polyester. In case the at least trifunctional branching agent b-4) is present in the biodegradable polyester, the concentration is usually 0.01 to 2 wt%, preferably 0.05 to 1 wt%, and particular preferred 0.08 to 0.20 wt%, based on the total weight of components b-1), b-2) and b-3) in the final polyester.

The biodegradable polyester b) may comprise as component b-5) a chain extender. Chain extenders are polyfunctional and especially difunctional isocyanates, isocyanurates, oxazolines, carboxylic anhydrides, carbodiimides or epoxides.

The term "epoxides" is to be understood as meaning particularly epoxy-containing copolymer based on styrene, acrylic ester and/or methacrylic ester, preferably of the styrene-glycidylether-methylmethacrylate type. The units which bear epoxy groups are preferably glycidyl (meth)acrylates. Copolymers having a glycidyl methacrylate content of greater than 20, more preferably greater than 30 and even more preferably greater than 50 wt% of the copolymer will be found particularly advantageous. Epoxy-containing copolymers of the abovementioned type are commercially available, for example from BASF Resins B.V. under the Joncryl® ADR brand. Joncryl® ADR 4468 and ADR 4400 are particularly useful as chain extender.

Difunctional isocyanates may be aromatic or aliphatic diisocyanates.

Examples of aromatic diisocyanates are tolylene 2,4-diisocyanate, tolylene 2,6-diisocyanate, 2,2'-diphenylmethane diisocyanate, 2,4'-diphenylmethane diisocyanate, 4,4'-diphenylmethane diisocyanate, naphthylene 1,5-diisocyanate or xylylene diisocyanate. Of these, particular preference is given to 2,2'-, 2,4'- and also 4,4'-diphenylmethane diisocyanates. In general, the latter diisocyanates are used as a mixture. The diisocyanates may also comprise minor amounts, for example up to 5% by weight, based on the total weight, of urethione groups, for example for capping the isocyanate groups.

The term "aliphatic diisocyanate" herein refers particularly to linear or branched alkylene diisocyanates or cycloalkylene diisocyanates having 2 to 20 carbon atoms, preferably 3 to 12 carbon atoms, for example 1,6-hexamethylene diisocyanate, 1,5-pentamethylene diisocyanate, isophorone diisocyanate or methylenebis(4-isocyanatocyclohexane). Particularly preferred aliphatic diisocyanates are isophorone diisocyanate and, in particular, 1,6-hexamethylene diisocyanate.

The preferred isocyanurates include the aliphatic isocyanurates which derive from alkylene diisocyanates or cycloalkylene diisocyanates having 2 to 20 carbon atoms, preferably 3 to 12 carbon atoms, for example isophorone diisocyanate or methylenebis(4-isocyanatocyclohexane). The alkylene diisocyanates here may be either linear or branched. Particular preference is given to isocyanurates based on n hexamethylene diisocyanate, for example cyclic trimers, pentamers or higher oligomers of 1,6-hexamethylene diisocyanate.

2,2'-Bisoxazolines are generally obtainable via the process from Angew. Chem. Int. Ed., Vol. 11 (1972), pp. 287-288. Particularly preferred bisoxazolines are those in which R1 is a single bond, a (CH2)z alkylene group, where z = 2, 3 or 4, such as methylene, 1,2-ethanediyl, 1,3-propanediyl, 1,2-propanediyl or a phenylene group.

Particularly preferred bisoxazolines are 2,2'-bis(2-oxazoline), bis(2-oxazolinyl)methane, 1,2-bis(2-oxazolinyl)ethane, 1,3-bis(2-oxazolinyl)propane or 1,4-bis(2-oxazolinyl)butane, in particular 1,4-bis(2-oxazolinyl)benzene, 1,2-bis(2-oxazolinyl)benzene or 1,3-bis(2-oxazolinyl)benzene.

Carbodiimides and polymeric carbodiimides are marketed by way of example by Lanxess with trademark Stabaxol® or by BASF Polyurethane GmbH with trademark Elastostab® or Carbodilite HMV-15CA and Carbodilite HMV-5CA-LC from Nisshinbo Chemical Inc.

Examples are poly(4, 4'-dicyclohexylmethane carbodiimide) (Carbodilite® type), poly(isophorone carbodiimide), poly(meta-tetramethylxylylene carbodiimide) (Elastostab® type), poly(2,2',6,6'-tetraisopropyldiphenylene carbodiimide) (Stabaxol® D), poly(2,4,6-triisopropyl-l,3-phenylene carbodiimide) (Stabaxol®P- 100), poly(2,6 diisopropyl- 1,3-phenylene carbodiimide) (Stabaxol®P).

Preferably the chain extender b-5) is selected from isophorone diisocyanate, 1,6-hexamethylene diisocyanate, 1,5-pentamethylendiisocyanate, 4,4-diphenylmethane diisocyanate, and epoxy-containing copolymers based on styrene, acrylic ester and methacrylic ester, preferably of the styrene-glycidylether-methylmethacrylate type.

The concentration of the chain extender b-5) is 0 to 2 wt%, based on the total weight of components b-1), b-2) and b-3). In case the chain extender b-5) is present its concentration is in the range of 0.01 wt.-% to 2 wt.-%, based on the total weight of components b-1), b-2) and b-3).

The number average molecular weight (Mn) of the aromatic-aliphatic polyesters used as component b) measured in a Hexafluoroisopropanol (HFIP) solution against narrow polymethylmethacrylate (PMMA) standards and a molecular weight exclusion limit of 100 - 1 000 000 g/mol is generally in the range from 5 000 to 100 000, preferably in the range from 10 000 to 75 000 g/mol, and more preferred in the range from 15 000 to 50 000 g/mol, their weight average molecular weight (Mw) is generally in the range from 30 000 to 300 000, preferably 60 000 to 200 000 g/mol, and their Mw/Mn ratio is generally in the range from 1 to 6, preferably in the range from 2 to 4. The viscosity number is between 30 and 450 g/mL and preferably in the range from 50 to 400 g/mL Here and throughout the specification, the viscosity number (VN) is determined according to DIN 53728-3:1985-1 at 25 °C using a solution of the respective polymer in a 50:50 w/w mixture of phenol and 1,2- dichlorobenzene. The melting point measured at 50% relative humidity at 23 °C by DSC with a heating rate of 20 °C is in the range from 85 to 150°C and preferably in the range from 95 to 140°C.

Polyesters suited for the use in the polymer composition generally have a melt volume rate (MVR) to EN ISO 1133 (190°C, 2.16 kg weight) of 0.5 to 40 cm$^3$/10 min and preferably of 0.8 to 15 cm$^3$/10 min.

Examples of biodegradable aliphatic-aromatic polyesters are poly(butylene-co-adipate-co-terephthalate) ("PBAT"), poly(butylene-co-sebacate-co-terephthalate) ("PBSeT"), poly(butylene-co-azelate-co-terephthalate) ("PBAzT"), poly(butylene-co-adipate-co-sebacinate-co-terephthalate) ("PBASeT"), poly(butylene-co-adipate-co-azelate-co-terephthalate) ("PBAAzT"), poly(butylene-co-adipate-co-brassylate-co-terephthalate) ("PBABrT"), poly(butylene-co-azelate-co-sebacinate-co-terephthalate) ("PBAzSeT"), poly(butylene-co-azelate-co-brassylate-co-terephthalate) ("PBAzBrT"), poly(butylene-co-brassylate-co-sebacinate-co-terephthalate) ("PBBrSeT"), poly(butylene-co-azelate-co-2,5-furanoate) ("PBAzF"), and poly(butylene-co-sebacate-co-2,5-furanoate) ("PBSeF"). Preferred are poly(butylene-co-sebacate-co-terephthalate), poly(butylene adipate-co-terephthalate), poly(butylene azelate-co-terephthalate), poly(butylene adipate-co-sebacate-co-terephthalate), poly(butylene adipate-co-azelate-co-terephthalate), poly(butylene azelate-co-sebacate-co-terephthalate and mixtures thereof. In particular preferred is poly(butylene-co-sebacate-co-terephthalate)

Biodegradable aliphatic-aromatic polyesters as described above are commercially available, e.g. under the tradename ecoflex® by BASF.

The aliphatic-aromatic polyester b) is preferably home compostable. The home compostability can be determined as described above.

The concentration of the biodegradable polyester b) in the polymer composition is at least 15 wt.-%, preferably at least 20 wt.-%, more preferred at least 25 wt.-%, based on the total weight of components a) and b). The maximum concentration of the biodegradable polyester b) in the polymer composition is 90 wt.-%, preferably 85 wt.-%, more preferred 75 wt.-%, even more preferred 65 wt.-% and in particular preferred 55 wt.-%, based on the total weight of components a) and b). Preferred concentration ranges of the biodegradable polyester b) are 20 to 90 wt.-%, more preferred 20 to 85 wt.-%, even more preferred 25 to 75 wt.-%, most preferred 25 to 65 wt.-% and in particular preferred 25 to 55 wt.-%, based on the total weight of components a) and b).

The overall concentration of the polylactic acid a) and the biodegradable polyester b) in the polymer composition is preferably at least 10 wt.-%, more preferred at least 20 wt.- %, even more preferred 25 wt.-%, and in particular preferred 50 wt.-%, based on the total weight of components a) to f). The maximum concentration of the polylactic acid a) and the biodegradable polyester b) in the polymer composition is 100 wt.-%, based on the total weight of components a) to f).

The polymer composition may comprise 0 to 40 wt.-%, based on components a) to f), of at least one biodegradable polyester c), which is different from the aliphatic-aromatic polyester b). Biodegradable polyester c) is preferably an aliphatic polyester. The biodegradable polyester c) may be selected from polyesters derived from:

c-1) at least one aliphatic $C_4$-$C_{18}$ dicarboxylic acid or $C_4$-$C_{18}$ dicarboxylic acid derivative or a mixture thereof;
b-3) 98 to 102 mol-%, based on the total amount of c-1), of at least one aliphatic $C_2$-$C_{10}$ diol;
b-4) 0 to 2 wt%, based on the total weight of components c-1) and b-3), of an at least trifunctional branching agent; and
b-5) 0 to 2 wt%, based on the total weight of components c-1) and b-3), of a chain extender;

or derived from:

c-6) at least one $C_2$-$C_{18}$ hydroxycarboxylic acid or $C_2$-$C_{18}$ hydroxycarboxylic acid derivative or a mixture thereof; and
b-4) 0 to 2 wt%, based on the total weight of component b-6), of an at least trihydric alcohol; and
b-5) 0 to 2 wt%, based on the total weight of component b-6), of a chain extender.

The components b-3), b-4) and b-5) are the same as described above and described as preferred for the aliphatic-aromatic polyester b).

The aliphatic dicarboxylic acid c-1) is selected from at least one aliphatic $C_4$-$C_{18}$ dicarboxylic acid or $C_4$-$C_{18}$ dicarboxylic acid derivative or a mixture thereof. The aliphatic dicarboxylic acid c-1) includes the aliphatic $C_6$-$C_{18}$ dicarboxylic acid or $C_6$-$C_{18}$ dicarboxylic acid derivative b-1) described above, but additionally includes aliphatic dicarboxylic acids with 4 to 7 C-atoms. Examples of such dicarboxylic aids are succinic acid, 2-ethylsuccinic acid, glutaric acid, 2-methylglutaric acid, 3-methylglutaric acid, 2,2-dimethylglutaric acid, diglycolic acid, adipic acid, pimelic acid, octadecanedioic acid, oxaloacetic acid, glutamic acid, aspartic acid, itaconic acid and maleic acid, their derivatives, in particular the $C_1$-$C_4$ dialkyl esters, and mixtures thereof. More preferred the aliphatic $C_4$-$C_{18}$ dicarboxylic acids c-1) are selected from succinic acid, adipic acid, azelaic acid, sebacic acid, 1,12-dodecanoic acid, brassylic acid, their derivatives, in particular the $C_1$-$C_4$ alkyl esters, and mixtures thereof, in particular preferred is succinic acid.

The $C_2$-$C_{18}$ hydroxycarboxylic acid or $C_2$-$C_{18}$ hydroxycarboxylic acid derivative c-6) may be selected from glycolic acid, hydroxypropionic acid, hydroxybutanoic acid, hydroxyvaleric acid, hydroxyhexanoic acid, hydroxydecanoic acid, hydroxydodecanoic acid, hydroxyhexadecanoic acid, hydroxyoctadecanoic acid, gamma-butyrolactone and epsilon-caprolactone. Within this specification, polylactide is not included in the aliphatic polyesters derived from b-6) and optionally b-4) and/or b-5).

Polyesters c) include polyhydroxyalkanoates, polyglycolic acid, polycaprolactone, and polybutyrolactone.

Polyhydroxyalkanoates are also referred to as polyhydroxy fatty acids and are understood in the context of the invention as meaning those which comprise monomers having a chain length in the polymer backbone of at least 3 carbon atoms. Polylactic acid and polyhydroxyacetic acid (also referred to as polyglycolic acid) are therefore not polyhydroxyalkanoates in the context of the invention. In the context of the invention, polycaprolactones (PCL) are not understood as polyhydroxyalkanoates, either.

In accordance with the invention, preference is given to using at least one polyhydroxyalkanoate comprising repeating monomer units of the formula (1)

$$[-O-CHR-(CH_2)_m-CO-] \qquad (1)$$

where R is hydrogen or a linear or branched alkyl group having 1 to 20, preferably 1 to 16 carbon atoms, preferably 1 to 6 carbon atoms and m=numbers from 1 to 18, preferably 1, 2, 3, 4, 5 and 6; and/or homopolymers of 2-hydroxybutyric acid.

The polyhydroxy fatty acids comprise homopolymers, i.e. polyhydroxy fatty acids consisting of identical hydroxy fatty acid monomers and also copolymers, i.e. polyhydroxy fatty acids consisting of different hydroxy fatty acid monomers.

Examples of polyhydroxyalkanoates are polyhydroxybutyrates, polyhydroxybutyrate-valerates, polyhydroxybutyrate propanoates, polyhydroxybutyrate-hexanoates, polyhydroxybutyrate-decanoates, polyhydroxybutyrate-dodecanoates, polyhydroxybutyrate-hexadecanoates, polyhydroxybutyrate-octadecanoates, and poly-3-hydroxybutyrate-4-hydroxybutyrates.

Poly-3-hydroxybutyrates are available from Tianan under the name Enmat®. Poly(3-hydroxybutyrate-co-4-hydroxybutyrate)s were first developed by Metabolix. and will be commercialized by CJ CheilJedang. Poly(3-hydroxybutyrate-co-3-hydroxyhexanoate)s are commercially available from Kaneka (Aonilex™) or Danimer Scientific (Nodax®). Poly(3-hydroxybutyrate-co-3-hydroxyhexanoate)s generally have a 3-hydroxyhexanoate content of 1 to 20 and preferably 3 to 15 mol-% based on the polyhydroxyalkanoate. Preferred are poly(hydroxybutyrate-co-hydroxyhexanoate)s, in particular poly(3-hydroxybutyrate-co-3-hydroxyhexanoate).

The molecular weight Mw of polyhydroxyalkanoates is generally in the range from 100 000 to 1 000 000 g/mol and preferably in the range from 300 000 to 600 000 g/mol, mol determined via GPC in HFIP (hexafluoro-2-propanol) as solvent against narrowly distributed PMMA standards.

Polycaprolactone, more precisely poly-ε-caprolactone, is a class of linear aliphatic polyesters obtained by the ring-opening polymerization of ε-caprolactone monomers under the catalysis of metal-organic compounds (such as tetraphenyltin). Generally, polycaprolactone has a melting point of 59 to 64°C and a glass transition temperature of -60°C. Its structural repeating unit has 5 non-polar methylene-$CH_2$- and one polar ester group -COO-, name-ly-$(COOCH_2CH_2CH_2CH_2CH_2-)n$. This structure makes polycaprolactone have good flexibility processability, and at the same time, good biocompatibility.

The molecular weight of the polycaprolactone is generally in the range from 40 000 to 100 000 g/mol and preferably in the range from 45 0000 to 85 000 g/mol determined via GPC in HFIP (hexafluoro-2-propanol) as solvent against narrowly distributed PMMA standards.

Polycaprolactone is commercially available for example from Daicel under the product name Placcel®, or from Ingevity under the product name Capa™.

Polyglycolic acid, also as known as polyglycolide, is a biodegradable, thermoplastic polymer and the simplest linear, aliphatic polyester. It can be prepared starting from glycolic acid by means of polycondensation or from glycolide by ring-opening polymerization.

Polyglycolic acid includes homopolymer of glycolic acid (inclusive of a ring-opening polymerization product of glycolide, which is a bimolecular cyclic ester of glycolic acid) consisting only of glycolic acid repeating unit represented by a formula of -$(O-CH_2-CO)$-and also a glycolic acid copolymer containing at least 70% by weight of the abovementioned glycolic acid repeating unit.

Examples of comonomers for providing the polyglycolic acid copolymer together with the glycolic acid monomer such as glycolide, may include, but are not limited to: cyclic monomers, inclusive of ethylene oxalate (i.e., 1,4-dioxane-2,3-dione); lactides; lactones, such as β-propiolactone, β-butyrolactone; pivalolactone, γ-butyrolactone, δ valerolactone, β-methyl-δ-valerolactone, and ε-caprolactone; carbonates, such as trimethylene carbonate; ethers, such as 1,3-dioxane; ether-esters, such as dioxanone; and amides, such as ε-caprolactam; hydroxycarboxylic acids, such as lactic acid, 3 hydroxypropanoic acid, 4-hydroxybutanonic acid and 6-hydroxycaproic acid, and their alkyl esters; substantially equal molar mixtures of aliphatic diols, such as ethylene glycol and 1,4-butane diol with aliphatic dicarboxylic acids, such as succinic acid and adipic acid, and their alkyl or aromatic esters; and two or more species of these. These monomers may be replaced by polymers thereof, which can be used as a starting material for providing a polyglycolic acid copolymer together with the above-mentioned glycolic acid monomer such as glycolide.

Preferably, the biodegradable polyester c) different from the polyester b) is selected from polycaprolactone (PCL), polybutylene succinate-co-adipate (PBSA), polybutylene succinate-co-sebacate (PBSSe), polybutylene succinate-co-azelate (PBSAz), and polybutylene succinate (PBS).

In case the polymer composition comprises one or more biodegradable polyester c) the concentration is at least 1 wt.-%, preferably at least 2 wt.-%, more preferred at least 5 wt.-%, based on components a) to f). The maximum concentration is 40 wt.-%, preferably 20 wt.-%, more preferred 10 wt.-%, based on components a) to f).

The polymer composition comprises 0 to 55 wt.-%, based on components a) to f), of at least one starch- or cellulose-based polymer d).

The term "starch-based polymer" as used herein means starch itself and polymers derived from starch.

Starch is a natural polymer composed of amylose and amylopectin. Amylose is essentially a linear polymer having a molecular weight in the range of 100,000-500,000, whereas amylopectin is a highly branched polymer having a molecular weight of up to several million. Although starch is produced in many plants, typical sources include seeds of cereal grains, such as corn, waxy corn, wheat, sorghum, rice, and waxy rice; tubers, such as potatoes; roots, such as tapioca (i.e., cassava and manioc), sweet potato, and arrowroot; and the pith of the sago palm. Broadly speaking, any natural (unmodified) and/or modified starch may be used as component c) in the polymer composition. Modified starches, for instance, are often employed that have been chemically modified by typical processes known in the art (e.g., esterification, etherification, oxidation, acid hydrolysis, enzymatic hydrolysis, etc.). Starch ethers and/or esters may be particularly desirable, such as hydroxyalkyl starches, carboxymethyl starches, etc. The hydroxyalkyl group of hydroxylalkyl starches may contain, for instance, 2 to 10 carbon atoms, in some embodiments from 2 to 6 carbon atoms, and in some embodiments, from 2 to 4 carbon atoms. Representative hydroxyalkyl starches such as hydroxyethyl starch, hydroxypropyl starch, hydroxybutyl starch, and derivatives thereof. Starch esters, for instance, may be prepared using a wide variety of anhydrides (e.g., acetic, propionic, butyric, and so forth), organic acids, acid chlorides, or other esterification reagents. The degree of esterification may vary as desired, such as from 1 to 3 ester groups per glucosidic unit of the starch.

Thermoplastic starch contains a plasticizer to help render the starch melt-processible. Starches, for instance, normally exist in the form of granules that have a coating or outer membrane that encapsulates the more water-soluble amylose and amylopectin chains within the interior of the granule. When heated, plasticizers may soften and penetrate the outer membrane and cause the inner starch chains to absorb water and swell. This swelling will, at some point, cause the outer shell to rupture and result in an irreversible destructurization of the starch granule. Once destructurized, the starch polymer chains containing amylose and amylopectin polymers, which are initially compressed within the granules, will stretch out and form a generally disordered intermingling of polymer chains. Upon resolidification, however, the chains may reorient themselves to form crystalline or amorphous solids having varying strengths depending on the orientation of the starch polymer chains. Because the starch is thus capable of melting and resolidifying at certain temperatures, it is generally considered a "thermoplastic starch".

Suitable plasticizers may include, for instance, water, polyhydric alcohol plasticizers, such as sugars (e.g., glucose, sucrose, fructose, raffinose, maltodextrose, galactose, xylose, maltose, lactose, mannose, and erythrose), sugar alcohols (e.g., erythritol, xylitol, malitol, mannitol, and sorbitol), polyols (e.g., ethylene glycol, glycerol, poly glycerol, propylene glycol, dipropylene glycol, butylene glycol, and hexane triol), etc. In case the starch grain contains a sufficient high amount of water, it is also possible to use the water present in the starch grain as plasticizer. Also suitable are hydrogen bond forming organic compounds which do not have hydroxyl group, including urea and urea derivatives; anhydrides of sugar alcohols such as sorbitan; animal proteins such as gelatin; vegetable proteins such as sunflower protein, soybean proteins, cotton seed proteins; and mixtures thereof. Other suitable plasticizers may include phthalate esters, dimethyl and diethylsuccinate and related esters, glycerol triacetate, glycerol mono and diacetates, glycerol mono, di, and tripropionates, butanoates, stearates, lactic acid esters, citric acid esters, adipic acid esters, stearic acid esters, oleic acid esters, and other acid esters. Aliphatic acids may also be used, such as copolymers of ethylene and acrylic acid, polyethylene grafted with maleic acid, polybutadiene-co-acrylic acid, polybutadiene-co-maleic acid, polypropylene-co-acrylic acid, polypropylene-co-maleic acid, and other hydrocarbon based acids. A low molecular weight plasticizer is preferred, such as less than about 20,000 g/mol, preferably less than about 5,000 g/mol and more preferably less than about 1,000 g/mol. Preferred plasticizers are water, glycerol, oligo-glycerol, sorbitol and hydrogenated hydrolysed starch syrup (CAS 68425-17-2).

The relative amount of starches and plasticizers employed in the thermoplastic starch may vary depending on a variety of factors, such as the desired molecular weight, the type of starch, the affinity of the plasticizer for the starch, etc. Typically, however, starches constitute from about 30 wt. % to about 95 wt. %, in some embodiments from about 40 wt. % to about 90 wt. %, and in some embodiments, from about 50 wt. % to about 85 wt. % of the thermoplastic starch. Likewise, plasticizers typically constitute from about 5 wt. % to about 55 wt. %, in some embodiments from about 10 wt. % to about 45 wt. %, and in some embodiments, from about 15 wt. % to about 35 wt. % of the thermoplastic composition. Depending on the intended use of the polymer composition different composition ranges may be more suited, see below.

The starch polymer d) may be selected from flour, native starch, modified starch, hydrolyzed starch, destructured starch, gelatinized starch, plasticized starch, thermoplastic starch, biofiller comprising complexed starch, and mixtures thereof. Preferably the starch polymer used as component d) is selected from native starches, more preferably from corn, potato, tapioca, pea, wheat or rice starch and most preferably from native corn or wheat starch, in particular preferred from corn.

Preferably the polymer composition contains at least one starch polymer d). In this case the concentration of the starch polymer d) is usually at least 2 wt.-%, preferred at least 5 wt.-%, more preferred 10 wt.-%, even more preferred at least 25 wt.-%, most preferred at least 30 wt.-%, and in particular preferred at least 35 wt.-%, based on the total weight of the components a) to f) of the polymer composition. The maximum concentration of the starch polymer d) is usually 55 wt.-%, preferred 50 wt.-%, more preferred 45 wt.-%, based on the total weight of the components a) to f) of the polymer composition. Preferred concentration ranges of the starch polymer d) are 2 to 55 wt.-%, more preferred 10 to 50 wt.-%, even more preferred 25 to 50 wt.-%, most preferred 30 to 45 wt.-%, and in particular preferred 35 to 45 wt.-%, based on the total weight of the components a) to f) of the polymer composition. Depending on the specific field of application of the films prepared from the polymer composition, different concentration ranges of the starch polymer d) may be preferred.

The weight of the starch polymer as used herein means the total weight of the starch polymer itself and an optionally present plasticizer but without water.

The term "cellulose-based" as used herein means cellulose itself and polymers derived from cellulose, e.g. cellulose hydrate also known as "Cellophane" or partially hydrolysed cellulose acetate.

The polymer composition may comprise 0 to 40 wt.-% based on component a) to f) at least one inorganic filler f). The filler may be selected from salts of alkaline earth metals, silicic acids and their salts, silica gel, silicates, silicon dioxide (quartz), bentonite, graphite, carbon black, iron oxide, kaolin, sodium carbonate, titanium dioxide, wollastonite, mica, bentonite, montmorillonites, and mineral fibers.

Alkaline earth salts include sulfates like gypsum ($CaSO_4$ hydrate) in different forms like natural gypsum, natural anhydrite, gypsum prepared from exhaust gas; halogenides like calcium chloride; carbonates like dolomite (MgCa(COa)z) or chalk ($CaCO_3$); phosphates like calcium phosphate, e.g. apatite, and monobasic, dibasic and tribasic phosphates of Mg; silicates; and hydrates of the aforementioned salts like talc ($Mg_3Si_4O_{10}(OH)_2$) and gypsum.

Preferred inorganic fillers e) are talc and $CaCO_3$, which can be used alone or in mixture.

In case an inorganic filler e) is present in the polymer composition, the concentration of the inorganic filler is at least 2 wt.-%, preferably at least 5 wt.-% based on the total weight of the polymer composition. The maximum concentration of the inorganic filler is usually 40 wt.-%, preferably 35 wt.-% and more preferred 30 wt.-%, based on the total weight of the components a) to f) of the polymer composition. Depending on the intended use of the polymer composition different composition ranges may be more suited, see below.

Calcium carbonate may be used for example at 10 to 30 wt%, preferably 10 to 28 wt% and more preferably 12 to 20 wt%, based on the total weight of the components a) to f) of the polymer composition. Calcium carbonate from Omya will prove suitable inter alia. The average particle size of calcium carbonate measured with a Malvern Mastersizer X is generally in the range from 0.2 to 10 micrometers, preferably 0.5 to 5 and more preferably 0.5 to 2.5 micrometers.

Talc may be used for example at 3 to 30 wt%, preferably 5 to 10 wt% and more preferably 5 to 8 wt%, based on the total weight of the components a) to f) of the polymer composition. Talc from companies Imerys and Elementis will be found suitable inter alia.

The polymer composition may comprise 0 to 40 wt%, based on components a) to f), of at least one compound selected from cross-linking agents, chain extenders, stabilizers, nucleating agents, lubricants, release agents, surfactants, waxes, antistatic agents, antifogging agent, dyes, pigments, UV absorbers, UV stabilizers, oxygen scavengers, dispersing agents, and other plastics additives as component f).

Examples of branching agents and chain extenders are the compounds listed under b-4) and b-5), preferred branching agents and chain extenders are epoxy-containing copolymer based on styrene, acrylic ester and methacrylic ester, preferably of the styrene-glycidylether-methylmethacrylate type, and carbobdiimides, in particular preferred are epoxy-containing copolymer based on styrene, acrylic ester and methacrylic ester, preferably of the styrene-glycidylether-methylmethacrylate type. Preferably the polymer composition contains 0.05 to 1 wt.-% by weight, preferably 0.05 to 0.2 wt.-%, based on the total weight of the components a) to f) of the polymer composition, of an epoxy-containing copolymer based on styrene, acrylic ester and/or methacrylic ester. Epoxy-containing copolymers of the abovementioned type are commercially available, for example from BASF Resins B.V. under the Joncryl® ADR brand. Joncryl® ADR 4468 and Joncryl® ADR 4400 are particularly suitable.

Examples of slip and release agents are $C_{18}$-$C_{24}$-carboxamide such as stearamide, oleamide, erucamide and behenamide, and stearates like calcium stearate. Preferably the polymer composition contains 0.05 wt.-% to 1 wt.-%, based on the total weight of the components a) to f) of the polymer composition, of a $C_{18}$-$C_{24}$-carboxamide, preferably selected from stearamide, erucamide, and behenamide or mixtures thereof.

Examples of surfactants are polysorbates, palmitates and laurates.

Examples of UV absorbers are 2-(4,6-bis-biphenyl-4-yl-1,3,5-triazin-2-yl)-5-(2-ethyl-(n)-hexyloxy)phenol and carbon black. Preparation and properties of said UV absorber are known from WO 2009/071475.

An example of a dispersing agent is polyvinylalcohol (PVOH).

Component f) is generally employed in concentrations of 0 to 40 wt.-%, preferably in in concentrations of 0 to 40 wt.-%, more preferred 0.05 to 40 wt.-%, even more preferred 0.1 to 40 wt.-%, and in particular preferred 0.1 to 35 wt.-%, based on the total weight of the components a) to f) of the polymer composition.

Surprisingly, the addition of home compostable aliphatic-aromatic polyester(s) b) to the non-home compostable PLA improves the home compostability of the PLA such that even compositions comprising high amounts of PLA become biodegradable under home composting conditions. The polymer compositions described herein are even home compostable in case PLA constitutes the major phase, e.g. in compositions containing 60, 70 or 80 wt.-% PLA and only 40, 30 or 20 wt.-% of the home compostable aliphatic-aromatic polyester b). Such compositions may even show faster biodegradation under home composting conditions than the pure polybutyle-sebacate-co-terephthalate as demonstrated in the examples with polybutyle-sebacate-co-terphthalate. The addition of biodegradable aliphatic-aromatic polyester(s) b) to the non-home compostable PLA enables the home compostability of PLA and improves the home compostability of PLA such that the overall resulting polymer composition becomes home compostable.

Preferred are polymer compositions wherein the matrix phase is formed by PLA or a PLA-containing composition.

Preferably polymer composition is home compostable according to ISO 14855-1 (2012) reaching 90% absolute or relative $CO_2$ evolution within 365 days at a temperature in the range of from 25 +/- 5°C determined by particles of the polymer composition with particle size of 100 to 300 microns.

Methods for producing the home compostable polymer compositions described above are known by the person skilled in the art includes physical mixing, e.g in an extruder, preferably the polymer composition is prepared by melt mixing.

The home compostable polymer composition can be used to produce home compostable articles. Such home compostable article can be in the form of a monolayer film, a multilayer film comprising at least one layer comprising the polymer composition, an injection molded article, a thermoformed article, a fiber, or an article having a coating comprising the polymer composition. For example, the home compostable article may be a bag, an agricultural or horticultural article, a flexible or rigid packaging article, tableware, cutlery, a non-woven article, a foam or an expandable bead for foaming.

Examples of bags are waste bags, in particular an organic waste bags, fruit and vegetable bags, and consumer bags. Examples of agricultural or horticultural articles are mulch films, clips, twines, and plant pots. Examples for flexible or rigid packagings are packagings for dry compounds and liquids, in particular food packaging for such as, for example, coffee, tea, soup powders, sauce powders, ice cream, confectionery (e.g. chocolate bars and muesli bars), yoghurt pots, fruit boxes, meal trays; food or beverage container for take away food and frozen food like bottles, clamshells, pots, cups, drink cartons, cartons, wrappers, and sachets; packaging for personal care like cosmetics and cleaning agents; packaging for medical articles; and agricultural packaging. Examples of tableware and cutlery are disposable tableware like cups, plates, and cutlery. Examples of foams are extruded foams and a bead foams, the article may also be fibres, mono filaments, multi filaments, staple fibers, nets or fabrics comprising such fibres like tea bags or hygienic articles.

Methods to produce home compostable articles from the home compostable polymer composition are known by the skilled person and include inter alia extrusion, mono and multilayer blown film extrusion, cast film extrusion, extrusion coating, injection molding, injection blow molding, thermoforming, cast film extrusion/thermoforming, extrusion blow molding and calendering/thermoforming.

The home compostable polymer composition may also be used for producing home compostable fibers and non-wovens e.g. by carding, air laying, wet laying, spunbonding, melt-blowing and electro-spinning.

The home compostable polymer composition may be used to produce a home compostable article comprising a substrate layer and at least one layer comprising the polymer composition, i.e. a home compostable article comprising a multilayer film as described above. The substrate layer may be selected from a nonwoven made of fibers, another polymer layer, paper, cardboard, board and/or a metal film.

The fibers of the non-woven used as substrate may be natural fibers or chemical fibers of natural polymers. Natural fibers are typically cellulose fibers. Cellulose fibers may be obtainable from vegetal sources like wood, rags, grass, silphie and bagasse, and from recycling of cellulose-fiber containing materials like paper. Chemical fibers of natural polymers are obtainable by chemical treatment of natural polymers like cellulose and chitin. A preferred chemical fiber of a natural polymer is viscose (obtainable by chemical treatment of cellulose). The thickness of such preferred substrate layers is preferably in the range of 10 $\mu$m to 500 $\mu$m, more preferably 30 $\mu$m to 300 $\mu$m. The non-woven may be obtainable by common state of the art papermaking-techniques, or other wet-lying techniques. The non-woven substrate may also be obtainable by means of a dry fiber molding process or dry pulp molding process.

Preferably, the substrate is selected from paper, cardboard, paperboard or fiber board. Suitable fibers for the production of said paper products include all commonly used types, e.g., mechanical pulp, bleached and unbleached chemical pulp, paper pulp from any annual crop, and waste paper (including in the form of broke, either coated or uncoated). The above fibers may be used either alone or as any mixture of them to produce the pulps from which paper products are made. For example, the term wood pulp includes groundwood pulp, thermomechanical pulp (TMP), chemothermomechanical pulp (CTMP), compression wood pulp, semi-chemical pulp, high-yield chemical pulp, and refiner pulp (RMP). Exemplary chemical pulps include sulfate pulps, sulfite pulps, and soda pulps. Examples of suitable annual plants for pulp production include rice, wheat, sugarcane, and kenaf.

The home compostable article comprising a substrate layer and at least one layer comprising or consisting of the polymer composition as described above may be produced known techniques usually applied in the field of packaging, for instance heatpressing, injection molding, co-injection molding, extrusion, especially co-extrusion, cast film extrusion, or blown film extrusion, lamination, bonding by means of an adhesive, and gas phase deposition.

The home compostable article comprising a substrate layer and at least one layer comprising or consisting of the polymer composition as described above may be processed by means of known techniques usually applied in the field of packaging, for instance thermoforming, sealing, folding, embossing, imprinting, printing, lamination, inmold labelling, bonding by means of an adhesive, coating (e.g. spray coating, gravure or reverse gravure coating, roller coating, flexo coating, air knife coating, dip coating, slot die coating, curtain coating, screen coating, extrusion coating) and corona treatment.

The polymer composition described herein is in particular suited to be used in the method for coating paper and cardboard described in EP 2 331 602 A1, which is included herein in its entirety.

Paper, cardboard or paperboard comprising a layer composed of the polymer composition described above is particularly well suited for the production of paper bags for dry foods, such as, for example, coffee, tea, soup powders, sauce powders; for liquids, such as, for example, coffee or tea cups, coffee or tea capsules, cosmetics, cleaning agents, beverages; of tube laminates; of paper carrier bags; of paper laminates and coextrudates for ice cream, confectionery (e.g. chocolate bars and muesli bars), of paper adhesive tape; of cardboard cups (paper cups), yoghurt pots; of meal trays; of wound cardboard containers (cans, drums), of wet-strength cartons for outer packagings (wine bottles, food); of fruit boxes of coated cardboard; of fast food plates; of clamp shells; of beverage cartons and cartons for liquids, such as detergents and cleaning agents, frozen food cartons, ice packaging (e.g. ice cups, wrapping material for conical ice cream wafers); of paper labels; of flower pots and plant pots.

Another object of the present invention is a process for producing a home compostable article comprising the steps:

(i) Providing a home compostable polymer composition as defined above,
(ii) Optionally processing the polymer composition,
(iii) Producing a home compostable article comprising the polymer composition obtained after step (i) or (ii).

Techniques which can be used in step (iii) are described above.

A further object of the present invention is a method for producing home compostable articles comprising polylactic acid by adding at least one biodegradable aliphatic-aromatic polyester derived from:

b-1) 20 bis 70 mol-%, based on the total amount of components b-1) and b-2), of at least one aliphatic $C_6$-$C_{18}$ dicarboxylic acid or $C_6$-$C_{18}$ dicarboxylic acid derivative,
b-2) 80 bis 30 mol-%, based on the total amount of components b-1) and b-2), of at least one aromatic dicarboxylic acid or aromatic dicarboxylic acid derivative,
b-3) 98 to 102 mol-%, based on the total amount of b-1) and b-2), of an aliphatic $C_2$-$C_{10}$ diol,
b-4) 0 to 2 wt%, based on the total weight of components b-1), b-2) and b-3), of an at least trihydric alcohol, and
b-5) 0 to 2 wt%, based on the total weight of components b-1), b-2) and b-3), of a chain extender;

to the polylactic acid.

Preferred polyesters b) and poly lactic acids a) are the ones described above.

Another object of the present invention is the use of home compostable aliphatic-aromatic polyesters derived from:

b-1) 20 bis 70 mol-%, based on the total amount of components b-1) and b-2), of at least one aliphatic $C_6$-$C_{18}$ dicarboxylic acid or $C_6$-$C_{18}$ dicarboxylic acid derivative,
b-2) 80 bis 30 mol-%, based on the total amount of components b-1) and b-2), of at least one aromatic dicarboxylic acid or aromatic dicarboxylic acid derivative,
b-3) 98 to 102 mol-%, based on the total amount of b-1) and b-2), of an aliphatic $C_2$-$C_{10}$ diol,
b-4) 0 to 2 wt%, based on the total weight of components b-1), b-2) and b-3), of an at least trihydric alcohol, and
b-5) 0 to 2 wt%, based on the total weight of components b-1), b-2) and b-3), of a chain extender;

for improving the home compostability of polylactic acid.

Preferred polyesters b) and poly lactic acids a) are the ones described above.

Even without further statements, it is assumed that a skilled person is able to utilize the above description in its widest extent. Consequently, the preferred embodiments and examples are to be interpreted merely as a descriptive enclosure which in no way has any limiting effect at all.

Examples:

Materials:

Cellulose
Polylactic acid (PLA): Ingeo 3251 D (NatureWorks LLC)
Poly(butylene-co-sebacate-co-terephthalate) (PBSeT): A PBSeT with a Se : T ratio of 52 : 48 and an MVR of 6 +/- 2 cm$^3$/10 min according to EN ISO 1133 (190 °C, 2.16 kg weight)

Preparation of the polymer compositions:

All blends were prepared by extrusion carried out with Coperion ZSK 26 MC twin-screw extruder (11 Zones; Zone 2 = 140 °C, Zones 3-11 = 190 °C) at a rotational speed of 300 rpm. Individual components were dosed via separate gravimetric scales in zone 1, and molten and mixed in the following zone. The polymer melt was degassed in zone 9 at 600 mbar. The temperature at the die plate was between 215 and 225 °C. The resulting compound was strand pelletized. The amount of the polymer components forming the blend of comparative examples CE1 and CE2 and the inventive examples IE1 and IE2 are summarized in the following table B. The amount of the blend components are given in % by weight, based on the total weight of the blend.

The compositions are shown table 1. Concentrations are given in wt.-%.

Table 1

|  | Cellulose | PLA | PBSeT |
|---|---|---|---|
| CE1 (comparison) | 100 |  |  |
| CE 2 (comparison) |  | 100 |  |
| CE 3 (comparison) |  |  | 100 |
| CE 4 (comparison) |  | 95 | 5 |
| CE 5 (comparison) |  | 90 | 10 |
| IE 6 (inventive) |  | 80 | 20 |
| IE 7 (inventive) |  | 70 | 30 |
| IE 8 (inventive) |  | 60 | 40 |

Sample preparation for biodegradation tests:

The plastic samples were cryo-milled using a Retsch ZM 300 ultra-centrifugal mill and sieved. The isolated fractions with size below 0.5 mm were collected and dried in a *vacuum* oven at 36 °C for 48 hours. Afterwards, particles with size between 100 μm to 300 μm were sieved using a Retsch AS 200 machine.

Biodegradability / Home compostability:

To prove biodegradability under home composting conditions, a down-scaled and adapted version of the standard ISO 14855 - Determination of the ultimate aerobic biodegradability of plastic materials under controlled composting conditions - Method by analysis of evolved carbon dioxide was used. The biodegradation experiments were performed using respirometer from ECHO instruments and evolved carbon dioxide was measured through IR-based measurements. Reactors had 1 L size (pressure DURAN laboratory glass bottles) and were closed with a cap with one air inlet and one air outlet. During incubation, air saturated with 100 % moisture was blown through the inlet over the compost at about 5 cm distance before flowing through the outlet to then reach the measuring units. For each reactor, 118.8 g of 20 week-old compost from OWS Belgium (sieve fraction below 0.5 cm), were mixed with 1.2 g of 2 week old compost (fraction below 0.5 cm) and 8 g test material. Blank, positive control, and each of the materials were tested in triplicate. The samples were incubated at 28 °C ± 2 °C for at least 176 days. During the experiment, the reactors were regularly opened, and the content mixed, twice during the first week, afterwards once per week. The results are shown in table 2. The biodegradation is given as % degradation.

An equivalent measurement was performed using a static system in which blank compost (3 reactors), positive control and compost (3 reactors) and test material and compost (3 reactors) were tested. Each replicate contained 49.5°g of 20 week-old compost from OWS Belgium (sieve fraction below 0.5 cm), mixed with 1.2 g of 2 week old compost (fraction below 0.5 cm) of compost. 3,33 g of the test material (or positive control) were mixed with the compost in the respective bottles. The compost had a total solids content of roughly 52.5%, a volatile solids content of more than 30% on dry solids and a pH between 7.0 and 9.0. The plastic cups were positioned in 1750 mL containers (Weck-jars) together with other two cups, the first containing 15 mL of Millipore-water for regulation of the humidity and the second containing 32 mL of 1M NaOH, used as $CO_2$ absorber. The "reactors" were closed airtight and incubated at 28°C +/- 2°C.

Within the first week, the $CO_2$ absorber was replaced with fresh 1M NaOH solution and the reactor is aerated every day. The compost was mixed at day 3 and 7. From the second week on, the absorber was replaced and the reactor was aerated 3 times per week and the compost mixed once per week. The $CO_2$ absorber extracted from the test was used to determine the amount of carbon dioxide evolved during the incubation. The concentration of carbon in the solution was measured with a Shimadzu Total Organic Carbon Analyzer. The results are incorporated into table 2.

The degree of mineralization was calculated by measuring the amount of carbon in the absorber solution of the test material (*Csample*) minus the carbon content of the absorber solution of the blank sample (*Cblank*), divided by the total amount of carbon of the test sample added to the compost test item.

$$Biodegradation\ (\%) = \frac{\sum(Csample - Cblank)}{Ctot} * 100$$

Table 2

| day | CE 1 | CE 2 | CE 3 | CE 4 | CE 5 | IE 6 | IE 7 | IE 8 |
|-----|------|------|------|------|------|------|------|------|
| | Biodegradation [%] | | | | | | | |
| 0 | 000 | 0.00 | 0.00 | 0.00 | 0.00 | 0.00 | 0.00 | 000 |
| 10 | 27.36 | 1.55 | -0.06 | 0.08 | 0.07 | 1.39 | 3.47 | 2.64 |
| 20 | 38.28 | 7.76 | -0.24 | 0.33 | 1.25 | 5.54 | 10.43 | 10.17 |
| 30 | 48.58 | 16.19 | -0.28 | 0.60 | 1.80 | 9.12 | 17,15 | 18.86 |
| 40 | 61.16 | 23.27 | -0.39 | 0.74 | 2.20 | 12.18 | 25.92 | 27.88 |
| 49 | 74.32 | 27.93 | -0.07 | 1.01 | 2.76 | 14.20 | 36.15 | 35,67 |
| 63 | 80.74 | 35.32 | 0.21 | 1.78 | 3.34 | 19.62 | 50.67 | 5007 |
| 70 | 82.78 | 38.50 | 0.34 | 2.12 | 3.53 | 22.67 | 57.17 | 56.88 |
| 80 | 85.99 | 42,42 | 0.66 | 2.44 | 3.80 | 27.06 | 64.28 | 65.35 |
| 91 | 88.84 | 46.63 | 0.82 | 2.70 | 4.06 | 33.66 | 70.93 | 72.50 |
| 101 | 90, 39 | 50.15 | 0.87 | 2.85 | 4.23 | 40.74 | 75.85 | 77.33 |
| 112 | 91.53 | 53.89 | 0.90 | 2.92 | 4.38 | 48.53 | 80.76 | 80,67 |
| 122 | 92. 34 | 57.28 | 0.93 | 304 | 4.49 | 56.87 | 84.00 | 82.82 |
| 133 | 9308 | 61.00 | 1.06 | 3.28 | 4.63 | 65.72 | 86.69 | 84.75 |
| 141 | 93.54 | 63.42 | 1.14 | 3.43 | 4.71 | 70.95 | 88.17 | 85.86 |
| 150 | 94.03 | 66.01 | 1.24 | 3.55 | 4.81 | 76.20 | 89.59 | 87.00 |
| 160 | 94.48 | 68.58 | 1.33 | 3.61 | 4.89 | 80.35 | 90.80 | 8806 |
| 171 | 94. 84 | 70.79 | 1,39 | 3.63 | 4.96 | 83.60 | 91.83 | 89.00 |
| 176 | 95.01 | 71.67 | 1.40 | 3.64 | 5.01 | 84.94 | 92.27 | 89.42 |
| 181 | 95.15 | 72.39 | 1.41 | test finished | test finished | 86.21 | 92.67 | 89.78 |
| 190 | test finished | test finished | test finished | | | 88.45 | test finished | test finished |
| 203 | | | | | | 90.90 | | |
| 210 | | | | | | 91.98 | | |
| 223 | | | | | | 93.61 | | |
| 234 | | | | | | 94.76 | | |
| 245 | | | | | | 9570 | | |
| 255 | | | | | | 96.44 | | |
| 266 | | | | | | 97.17 | | |
| 273 | | | | | | 97.49 | | |

Compositions comprising 90 to 100 wt.-% PLA and up to 10 wt.-% PBSeT do almost not degrade at home compostable conditions whereas compositions comprising more than 10 wt.-% polybutylene-co-sebacate-terephthalate and less than 90 wt.-% polylactic acid show strong biodegradation under home compostable conditions. The compositions comprising both PLA and PBSeT wherein the concentration of the PLA is below 90 wt.-% degrade even faster than pure PBSeT. This is an indication of a synergistic effect of the mixture of PLA and PBSeT on the biodegrability.

**Claims**

1. Use of a polymer composition comprising

   a) 10 to 85 wt.-%, based on the total weight of the polylactic acid a) and the aliphatic-aromatic biodegradable polyester b), of at least one polylactic acid a);
   b) 15 to 90 wt.-%, based on the total weight of the polylactic acid a) and the aliphatic-aromatic biodegradable polyester b), of at least one biodegradable aliphatic-aromatic polyester (b) derived from:

   b-1) 20 bis 70 mol %, based on the total amount of components b-1) and b-2), of at least one aliphatic $C_6$-$C_{18}$ dicarboxylic acid or $C_6$-$C_{18}$ dicarboxylic acid derivative,
   b-2) 80 bis 30 mol %, based on the total amount of components b-1) and b-2), of at least one aromatic dicarboxylic acid or aromatic dicarboxylic acid derivative,
   b-3) 98 to 102 mol %, based on the total amount of b-1) and b-2), of an aliphatic $C_2$-$C_{10}$ diol,
   b-4) 0 to 2 wt%, based on the total weight of components b-1), b-2) and b-3), of an at least trihydric alcohol, and
   b-5) 0 to 2 wt%, based on the total weight of components b-1), b-2) and b-3), of a chain extender;

   c) 0 to 40 wt.-%, based on components a) to f), of at least one biodegradable polyester different from the biodegradable aliphatic-aromatic polyester b);
   d) 0 to 55 wt.-%, based on components a) to f), of at least one starch- or cellulose-based polymer;
   e) 0 to 40 wt.-%, based on components a) to f), of at least one inorganic filler; and
   f) 0 to 40 wt%, based on components a) to f), of at least one compound selected from cross-linking agents, chain extenders, stabilizers, nucleating agents, lubricants, release agents, surfactants, waxes, antistatic agents, antifogging agent, dyes, pigments, UV absorbers, UV stabilizers, oxygen scavengers, dispersing agents, and other plastics additives.

   for producing home compostable articles.

2. The use according to claim 1 wherein the biodegradable polyester b) is derived from

   b-1) 20 bis 70 mol %, based on the total amount of components b-1) and b-2), of at least one aliphatic $C_6$-$C_{13}$ dicarboxylic acid or $C_6$-$C_{13}$ dicarboxylic acid derivative,
   b-2) 80 bis 30 mol %, based on the total amount of components b-1) and b-2), of at least one dicarboxylic acid selected form terephthalic acid, furane dicarboxylic acid, their derivatives, and mixtures thereof,
   b-3) 98 to 102 mol %, based on the total amount of b-1) and b-2), of an aliphatic $C_3$-$C_4$ diol,
   b-4) 0 to 2 wt%, based on the total weight of components b-1), b-2) and b-3), of an at least trihydric alcohol, and
   b-5) 0 to 2 wt%, based on the total weight of components b-1), b-2) and b-3), of a chain extender.

3. The use according to any of claims 1 or 2, wherein the biodegradable polyester b) is selected from poly(butylene sebacate-co-terephthalate), poly(butylene adipate-co-terephthalate), poly(butylene azelate-co-terephthalate), poly(butylene adipate-co-sebacate-co-terephthalate), poly(butylene adipate-co-azelate-co-terephthalate), poly(butylene azelate-co-sebacate-co-terephthalate) and mixtures thereof.

4. The use according to any of claims 1 to 3 wherein the concentration of the polylactic acid a) is in the range from 10 wt.-% to 80 wt.-% and the concentration of the biodegradable aliphatic-aromatic polyester b) is in the range of from 20 to 90 wt.-%, based on the total weight of the polylactic acid a) and the aliphatic-aromatic biodegradable polyester b).

5. The use according to any of claims 1 to 4 wherein the overall concentration of the polylactic acid a) and the biodegradable polyester b) in the polymer composition is 10 to 100 wt.-%, based on the total weight of components a) to f).

6. The use according to any of claims 1 to 5 wherein the polymer composition is home compostable according to ISO 14855-1 (2012) reaching 90% absolute or relative $CO_2$ evolution within 365 days at a temperature in the range of from 25 +/- 5°C determined by particles of the polymer composition with particle size of 100 to 300 microns.

7. The use according to any of claims 1 to 6 wherein the home compostable article is a monolayer film, a multilayer film comprising at least one layer comprising the home compostable polymer composition, an injection molded article, a thermoformed article, a fiber, or an article having a coating comprising the home compostable polymer composition.

8. The use according to any of claims 1 to 7 wherein the home compostable article is a bag, an agricultural or horticultural article, a flexible or rigid packaging article, tableware, cutlery, a non-woven article, a foam or an expandable bead for foaming.

9. The use according to any of claims 1 to 8 wherein the home compostable article comprises a substrate layer and at least one layer comprising the home compostable polymer composition.

10. A process for producing a home compostable article comprising the steps:

    (iv) Providing a home compostable polymer composition as defined in any of claims 1 to 6,
    (v) Optionally processing the polymer composition,
    (vi) Producing a home compostable article comprising the polymer composition obtained after step (i) or (ii).

11. Method for producing home compostable articles comprising polylactic acid by adding at least one biodegradable aliphatic-aromatic polyester derived from:

    b-1) 20 bis 70 mol %, based on the total amount of components b-1) and b-2), of at least one aliphatic $C_6$-$C_{18}$ dicarboxylic acid or $C_6$-$C_{18}$ dicarboxylic acid derivative,
    b-2) 80 bis 30 mol %, based on the total amount of components b-1) and b-2), of at least one aromatic dicarboxylic acid or aromatic dicarboxylic acid derivative,
    b-3) 98 to 102 mol %, based on the total amount of b-1) and b-2), of an aliphatic $C_2$-$C_{10}$ diol,
    b-4) 0 to 2 wt%, based on the total weight of components b-1), b-2) and b-3), of an at least trihydric alcohol, and
    b-5) 0 to 2 wt%, based on the total weight of components b-1), b-2) and b-3), of a chain extender;

    to the polylactic acid.

12. Use of biodegradable aliphatic-aromatic polyesters derived from:

    b-1) 20 bis 70 mol %, based on the total amount of components b-1) and b-2), of at least one aliphatic $C_6$-$C_{18}$ dicarboxylic acid or $C_6$-$C_{18}$ dicarboxylic acid derivative,
    b-2) 80 bis 30 mol %, based on the total amount of components b-1) and b-2), of at least one aromatic dicarboxylic acid or aromatic dicarboxylic acid derivative,
    b-3) 98 to 102 mol %, based on the total amount of b-1) and b-2), of an aliphatic $C_2$-$C_{10}$ diol,
    b-4) 0 to 2 wt%, based on the total weight of components b-1), b-2) and b-3), of an at least trihydric alcohol, and
    b-5) 0 to 2 wt%, based on the total weight of components b-1), b-2) and b-3), of a chain extender;

    for improving the home compostability of polylactic acid.

Europäisches
Patentamt

European
Patent Office

Office européen
des brevets

# EUROPEAN SEARCH REPORT

**Application Number**

EP 23 16 4414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/134850 A1 (KINGFA SCIENCE & TECHNOLOGY CO [CN]) 2 July 2020 (2020-07-02) * example 4; table 2 * * page 5, last paragraph * ----- | 1-12 | INV. C08L67/02 C08L67/04 |
| X | WO 2021/185339 A1 (TORAY ADVANCED MATERIALS RES LABORATORIES CHINA CO LTD [CN]) 23 September 2021 (2021-09-23) * example 12; table 1 * * claims 1, 2, 9, 24 * ----- | 1-12 | |
| X | CN 108 219 396 A (YANG HONGMEI) 29 June 2018 (2018-06-29) * examples * * claims * ----- | 10,11 | |
| X | WO 2014/029692 A2 (BASF SE [DE]; BASF SCHWEIZ AG [CH]) 27 February 2014 (2014-02-27) * claims * * examples * ----- | 10,11 | TECHNICAL FIELDS SEARCHED (IPC) |
| E | WO 2023/052144 A1 (NESTLE SA [CH]) 6 April 2023 (2023-04-06) * page 18, lines 33-36; example 12; table 2 * * claims * ----- | 1-12 | C08L |

The present search report has been drawn up for all claims

| Place of search | Date of completion of the search | Examiner |
|---|---|---|
| The Hague | 22 August 2023 | Schlicke, Benedikt |

EPO FORM 1503 03.82 (P04C01)

## ANNEX TO THE EUROPEAN SEARCH REPORT
## ON EUROPEAN PATENT APPLICATION NO.

EP 23 16 4414

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2023

| Patent document cited in search report | | Publication date | Patent family member(s) | | Publication date |
|---|---|---|---|---|---|
| WO 2020134850 | A1 | 02-07-2020 | CN | 109627709 A | 16-04-2019 |
| | | | WO | 2020134850 A1 | 02-07-2020 |
| WO 2021185339 | A1 | 23-09-2021 | CA | 3172825 A1 | 23-09-2021 |
| | | | CN | 114207031 A | 18-03-2022 |
| | | | JP | 2023524347 A | 12-06-2023 |
| | | | US | 2023193021 A1 | 22-06-2023 |
| | | | WO | 2021185339 A1 | 23-09-2021 |
| CN 108219396 | A | 29-06-2018 | NONE | | |
| WO 2014029692 | A2 | 27-02-2014 | CN | 104583312 A | 29-04-2015 |
| | | | EP | 2888323 A2 | 01-07-2015 |
| | | | JP | 6253650 B2 | 27-12-2017 |
| | | | JP | 2015526560 A | 10-09-2015 |
| | | | US | 2015218368 A1 | 06-08-2015 |
| | | | WO | 2014029692 A2 | 27-02-2014 |
| WO 2023052144 | A1 | 06-04-2023 | NONE | | |

EPO FORM P0459

For more details about this annex : see Official Journal of the European Patent Office, No. 12/82

## REFERENCES CITED IN THE DESCRIPTION

**Patent documents cited in the description**

- US 20080281018 A1
- US 5142023 A
- WO 2020251745 A1
- WO 2008115840 A
- WO 2009071475 A
- EP 2331602 A1

**Non-patent literature cited in the description**

- *Environ. Sci. Technol.,* 2018, vol. 52, 10441-10452
- *Angew. Chem. Int. Ed.,* 1972, vol. 11, 287-288
- *CHEMICAL ABSTRACTS,* 68425-17-2